**Europäisches Patentamt**

**European Patent Office**

**Office européen des brevets**

(19)

(11) Veröffentlichungsnummer: **0 212 164**
**B1**

(12) # EUROPÄISCHE PATENTSCHRIFT

(45) Veröffentlichungstag der Patentschrift: **14.03.90**

(21) Anmeldenummer: **86108973.8**

(22) Anmeldetag: **02.07.86**

(51) Int. Cl.⁵: **B 65 G 47/24,** B 23 P 19/04

(54) **Vorrichtung zum ausgerichteten Zuführen von gewendelten Federn an eine Arbeitsstation.**

(30) Priorität: **17.07.85 DE 3525463**

(43) Veröffentlichungstag der Anmeldung:
**04.03.87 Patentblatt 87/10**

(45) Bekanntmachung des Hinweises auf die
Patenterteilung:
**14.03.90 Patentblatt 90/11**

(84) Benannte Vertragsstaaten:
**AT BE CH DE FR GB IT LI LU NL SE**

(56) Entgegenhaltungen:
**DE-A-3 540 201**
**DE-C- 559 512**
**DE-C-3 525 463**
**GB-A- 763 338**
**US-A-3 032 076**
**US-A-3 156 269**
**US-A-4 091 915**
**US-A-4 148 389**
**US-A-4 744 456**

(73) Patentinhaber: **Kumeth, Siegmund**
**Bayreuther Strasse 37**
**D-8450 Amberg (DE)**

(72) Erfinder: **Kumeth, Siegmund**
**Bayreuther Strasse 37**
**D-8450 Amberg (DE)**

(74) Vertreter: **Graf, Helmut, Dipl.-Ing. et al**
**Patentanwälte Dipl.-Ing. A. Wasmeier Dipl.-Ing.**
**H. Graf Greflinger Strasse 7 Postfach 382**
**D-8400 Regensburg (DE)**

Courier Press, Leamington Spa, England.

**Beschreibung**

Gewendelte Federn bzw. Zugfedern, die auch in ihrer speziellen Ausführung als "Schenkelfedern" verwendet werden und zumindest an einem Ende bzw. Schenkel mit einer offenen Öse versehen sind, werden bei der Herstellung von Bauteilen, Geräten usw. auf allen Gebieten der Technik sehr häufig verwendet. Die automatische Verarbeitung bzw. Montage derartiger Federn bereitet auch heute noch große Probleme, und zwar insbesondere dann, wenn diese Federn wahllos in einem Vorrat, d.h. beispielsweise in einer von einem Vibrationstopf gebildeten Aufgabevorrichtung oder -Einrichtung zur weiteren Verarbeitung bereitgestellt werden. Mit Hilfe einer besonderen Ausbildung der Aufgabeeinrichtung bzw. der an dieser Aufgabeeinrichtung vorgesehenen Führungsbahnen ist es zwar grundsätzlich möglich, die Federn derart auszurichten, daß sie mit ihrer Längserstreckung in Förderrichtung liegend einem Montageautomaten zugeführt werden, wobei durch besondere Maßnahmen auch weitestgehend dafür gesorgt werden kann, daß nur solche Federn an den Montageautomaten gelangen, die nicht ineinander verhängt sind, es sind jedoch bisher keine Vorrichtungen auf dem Markt erhältlich, mit denen ein zuverlässiges Ausrichten von gewendelten Federn oder Schenkelfedern um die Längserstreckung ihrer Federkörper in der Weise möglich wäre, daß sämtliche an die Arbeitsstation eines Montageautomaten geförderte Federn auch bezüglich ihrer Ösen bzw. der diese Ösen bildenden hakenförmigen Abwinklungen eine der weiteren Verarbeitung bzw. der Montage entsprechende jeweils gleichartige Ausrichtung aufweisen, obwohl an sich von der Herstellung der Federn her gewährleistet ist, daß die an den Schenkeln vorgesehenen Osen bei jeder Feder stets eine genau vorgegebene räumliche Zuordnung zueinander besitzen.

Zum Verpacken von Löffeln in Schachteln sind ein Verfahren sowie eine Vorrichtung zum ausgerichteten Zuführen dieser Löffel an diese Verpackungsschachtel bekannt (US-A- 4091915). Die Löffel, die am Ende ihres Löffelstiels jeweils einen Haken aufweisen, werden über eine erste von einem Förderband gebildete Fördereinrichtung zugeführt, auf der die Löffel mit ihrer Längserstreckung in Förderrichtung angeordnet sind. Am Ende dieser ersten Fördereinrichtung werden diejenigen Löffel, die auf der ersten Fördereinrichtung bereits zufällig eine vorgegebene Orientierung aufweisen, an eine sich senkrecht zur Förderrichtung der ersten Fördereinrichtung erstreckende zweite Fördereinrichtung übergeben, die im wesentlichen von einer Länge einer endlos umlaufend angetriebenen Drahtschlaufe gebildet ist und auf der nur die richtig orientierten Löffel mit ihrem am Löffelstiel vorgesehenen Haken nach unten hängend weggefördert werden. Hierfür ist die die zweite Fördereinrichtung bildende Länge der Drahtschlaufe mit ihrem Anfang über der ersten Fördereinrichtung und in Förderrichtung vor deren Ende derart vorgesehen, daß jeder richtig orientierte Löffel dann, wenn er das Ende der ersten Fördereinrichtung erreicht, mit seinem Löffelende nach unten kippt und dabei mit seinem den Haken aufweisenden Löffelstiel derart nach oben geschwenkt wird, daß sich dieser Haken an dem der zweite Fördereinrichtung bildenden Drahtschlaufe einhängt. Dieses bekannte Verfahren bzw. diese bekannte Vorrichtung sind nur für die Verwendung bei Löffeln und dabei speziell für die Verwendung bei solchen Löffeln geeignet, die am Ende des Löffelstiels einen Haken aufweisen. Dieses bekannte Verfahren bzw. diese bekannte Vorrichtung setzen voraus, daß die Löffel an ihrem Löffelstiel zumindest dort eine einigermaßen ebene Auflagefläche aufweisen, wo die Löffel beim Kippen und Einhängen an der Drahtschlaufe auf der ersten Fördereinrichtung aufliegen Nur eine einigermaßen ebene Anlagefläche kann das für das Einhängen erforderliche Kippen mit der erforderlichen Sicherheit gewährleisten. Zum ausgerichteten Zuführen von gewendelten Federn sind dieses bekannte Verfahren bzw. diese bekannte Vorrichtung nicht geeignet.

Stand der Technik gemäß Artikel 54 (3) EPÜ ist weiterhin ein Verfahren zum Ausrichten von gewendelten Federn, bei dem die in einer Führung einer ersten Fördereinrichtung angeordneten Federn jeweils bei Erreichen des Endes dieser ersten Fördereinrichtung mit Hilfe eines in die vordere Düse einschwenkenden schwertartigen Elementes um ihre Längsachse derart gedreht werden, daß jede Feder danach mit der offenen Seite der vorderen Öse nach oben weist. Die einzelnen Federn werden dann in diesem ausgerichteten Zustand von dem Ende der ersten Fördereinrichtung an eine zweite, zangenartig ausgebildete Fördereinrichtung übergeben und an eine Arbeitsstation weitergeleitet. Die für dieses Verfahren benötigte Vorrichtung weist jedoch eine relativ aufwendige Konstruktion auf.

Dieser Stand der Technik entspricht der EP-A- 0 173 863, die ein Verfahren zum ausgerichteten Zuführen von gewendelten Federn beschreibt, die an wenigstens einem ihrer beiden Federenden mit einer offenen Öse versehen sind, an eine Arbeitsstation, wobei die Federn, die mit ihrem Federkörper auf einer Auflagefläche einer ersten Fördereinrichtung aufliegen und mit ihrer Längserstreckung in Förderrichtung dieser ersten Fördereinrichtung angeordnet sind, dem Ende dieser ersten Fördereinrichtung zugeführt und über eine zweite Fördereinrichtung, die mit ihrem Anfang auf das Ende der ersten Fördereinrichtung folgt, an die Arbeitsstation weitergeleitet werden.

Aufgabe der Erfindung ist es, ein Verfahren aufzuzeigen, welches ein Ausrichten und ausgerichtetes Zuführen von gewendelten Federn an eine Arbeitsstation zuverlässig und bei vereinfachter Konstruktion der verwendeten Arbeitsmittel ermöglicht.

Zur Lösung dieser Aufgabe wird ein Verfahren zum ausgerichteten Zuführen von gewendelten Federn, die an wenigstens einem ihrer beiden Federenden mit einer offenen Öse versehen sind, an eine Arbeitsstation vorgeschlagen, wobei die Federn die mit ihrem Federkörper auf einer Auflagefläche einer ersten Fördereinrichtung aufliegen und mit ihrer Längserstreckung in Förderrichtung dieser ersten Fördereinrichtung angeordnet sind, dem Ende dieser ersten Fördereinrichtung zugeführt und über eine zweite Fördereinrichtung, die mit ihrem Anfang auf das Ende der ersten Fördereinrichtung folgt, an die Arbeitsstation weitergeleitet werden, wobei die Federn auf der ersten Fördereinrichtung über das dortige Ende, welches mit Abstand von dem Anfang der zweiten Fördereinrichtung vorgesehen ist, soweit hinausbewegt werden, bis die jeweilige Feder mit ihrem vorauseilenden, durch die erste Fördereinrichtung nicht mehr abgestützten Federende nach unten kippt, wobei bei diesem nach Untenkippen solche Federn, die an ihrem vorauseilenden Federende eine mit ihrer Öffnung nach unten gerichtete Öse aufweisen, sich mit dieser Öse an einem Bereich einer Führungsleiste der zweiten Fördereinrichtung einhängen und mit ihrer Öse an dieser Führungsleiste nach unten hängend der Arbeitsstation zugeführt werden, wobei der genannte Bereich quer zur Förderrichtung verläuft und eine freiliegende Oberkante aufweist, die in etwa in einer Ebene mit der Auflagefläche der ersten Fördereinrichtung liegt.

Weiterhin bezieht sich die Erfindung auf eine Vorrichtung zum Durchführen dieses Verfahrens.

Bei dem erfindungsgemäßen Verfahren bzw. bei der hierfür verwendeten Vorrichtung werden die über die erste Fördereinrichtung an deren Ende herangeführten Federn an die zweite Fördereinrichtung dadurch übergeben, daß jede Feder, die Ende der ersten Fördereinrichtung erreicht hat, sich mit einer Teillänge zunehmend über das Ende der ersten Fördereinrichtung hinausbewegt wird und sich dabei mit der in Förderrichtung vorauseilenden offenen Öse über den den Anfang der zweiten Fördereinrichtung bildenden Bereich der Führungsleiste dieser Fördereinrichtung schiebt. Dann, wenn die Feder schließlich soweit über das Ende der ersten Fördereinrichtung frei vorsteht, daß sich auch der Masseschwerpunkt dieser Feder außerhalb der Auflagefläche der ersten Fördereinrichtung befindet, hat die Feder die Tendenz aus der ersten Fördereinrichtung nach unten wegzukippen bzw. herauszufallen. Sofern die in Förderrichtung vorneliegende Öse mit ihrer offenen Seite nach unten weist oder aber aus dieser Idealstellung um ihre Längsachse nicht über einen bestimmten Winkelbetrag verdreht ist, also eine die Übergabe an die zweite Fördereinrichtung ermöglichende Lage (nachfolgend als "Übergabelage" bezeichnet) wird sich die Feder beim Nachuntenkippen mit der in Förderrichtung vorderen offenen Ose an der Füh-rungsleiste der zweiten Fördereinrichtung einhän-gen, so daß an der Führungsleiste der zweiten Fördereinrichtung in dichter Folge nacheinander, jeweils an einer offenen Öse gehalten und von der Führungsleiste vertikal nach unten hängend Federn angeordnet sind, die hierdurch eine jeweils gleichartige Orientierung aufweisen und in dem so ausgerichteten Zustand einer Arbeitsstation zugeführt werden können. Solche Federn, die bei Erreichen des Endes der ersten Fördereinrichtung nicht die Übergabelage aufweisen, fallen nach dem Erreichen des Endes der ersten Fördereinrichtung nach unten und werden beispiels-weise von einer Auffangvorrichtung aufgenom-men, aus der sie dann an den Vorrat zurücktransportiert werden können. Durch Einstellung des Abstandes zwischen dem Ende der ersten Fördereinrichtung und dem Anfang der zweiten Fördereinrichtung kann die verwendete Vorrichtung auf die Verarbeitung von Federn unterschiedlicher Größe eingestellt werden.

Weiterhin ist es mit dem erfindungsgemäßen Verfahren bzw. mit der entsprechenden Vorrich-tung auch möglich, asymmetrische Schenkel-federn, d.h. Schenkelfedern, die unterschiedlich lange Schenkel an ihren Enden aufweisen, so auszurichten, daß die ausgerichteten Schenkelfedern an der zweiten Fördereinrichtung beispielsweise jeweils mit ihrem längeren Schenkel nach oben weisen.

Weiterbildungen der Erfindung sind Gegenstand der Unteransprüche.

Die Erfindung wird im folgenden anhand der Figuren an Ausführungsbeispielen näher erläutert. Es zeigen:

Fig. 1 in schematischer Darstellung und in Seitenansicht eine Vorrichtung zum ausgerichteten Zuführen von gewendelten Federn gemäß der Erfindung;

Fig. 2 die Vorrichtung gemäß Fig. 1 in Draufsicht;

Fig. 3a und 3b in vergrößerter Detaildarstellung und in Seitenansicht den Anfang der zweiten Fördereinrichtung der Vorrichtung gemäß Fig. 1, zusammen mit einer an das Ende der ersten Fördereinrichtung geförderten Schenkelfeder, jedoch bei unterschiedlicher Lage dieser Feder;

Fig. 4 bis 6 verschiedene im Bereich der zweiten Fördereinrichtung vorgesehene Maßnahmen zum Lösen verhängten Schenkelfedern.

In den Figuren sind mit 1 als Zugfedern ausgebildete und in üblicherweise aus Federdraht hergestellte gewendelte Federn in Form von Schenkelfedern bezeichnet, die jeweils einen gewendelten Federkörper 2 sowie an jedem Ende einen, sich in Längsrichtung des Federkörpers 2 erstreckenden Schenkel 3 bzw. 4 aufweisen, von denen jeder an seinem freien Ende zu einer offenen Öse 5 bzw. 6 umgebogen ist.

Da bei der dargestellten Ausführung der Schenkel 4 jeweils eine größere Länge als der Schenkel 3 besitzt, können die Schenkelfedern 1 auch als "asymmetrische Schenkelfedern" bezeichnet werden.

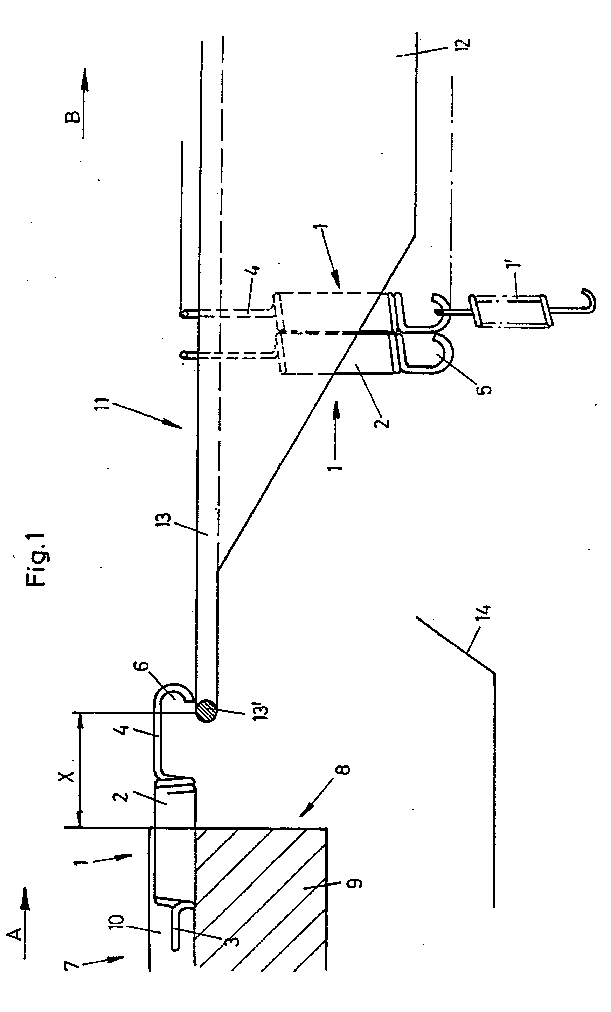

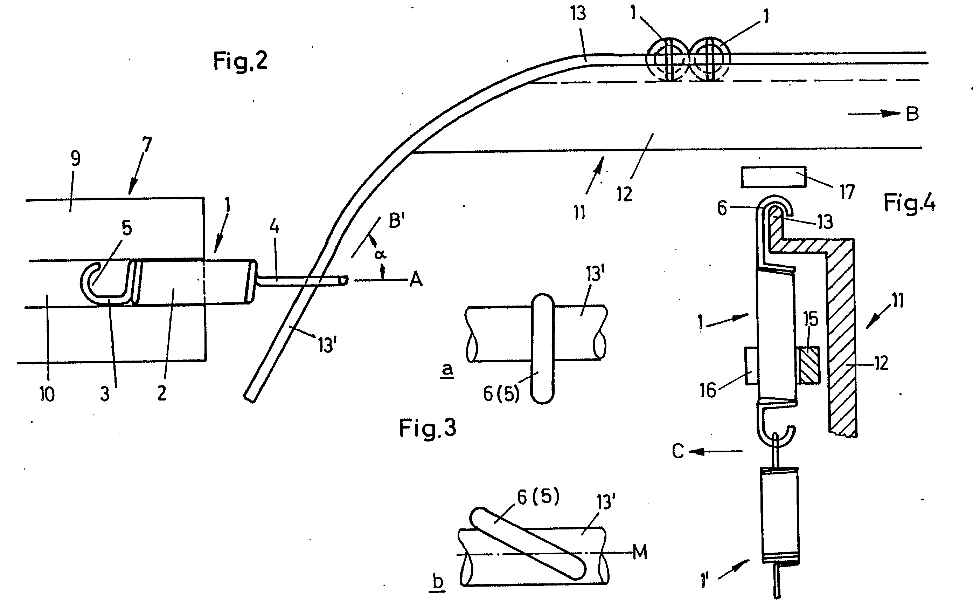

Die Schenkelfedern 1 werden aus einem nicht näher dargestellten Federvorrat (z.B. Vorratsbehälter) über eine erste Fördereinrichtung 7 bei der für die Figuren 1 und 2 gewählten Darstellung von links nach rechts an das rechte Ende 8 dieser Fördereinrichtung gefördert, und zwar entsprechend der durch den Pfeil A angegebenen Förderrichtung. Die Fördereinrichtung 7 ist bei der dargestellten Ausführungsform ein als Linearförderer (Linearschiene) ausgebildeter Vibrationsförderer. Unabhängig von der speziellen Ausgestaltung der Fördereinrichtung 7 werden die Schenkelfedern 1 an das Ende 8 derart gefördert, daß sie zumindest im Bereich dieses Endes mit ihrer Längserstreckung in Förderrichtung A der Fördereinrichtung 7 liegen. Bei der dargestellten Ausführungsform verläuft die Förderrichtung A zumindest am Ende 8 in horizontaler Richtung. Es versteht sich, daß die Schenkelfedern 1 in Reihe nacheinander an das Ende 8 gefördert werden.

Die Fördereinrichtung 7 besteht im wesentlichen aus einem schienenartigen Element 9, welches mit der zur Erzielung der Förderwirkung notwendigen Vibration bzw. Bewegung beaufschlagt ist und zur Führung der Schenkelfedern 1 an seiner Oberseite eine hier und auch am Ende 8 offene Führungsnut 10 aufweist, die an den in Förderrichtung A verlaufenden Seiten sowie am Boden geschlossen ist.

An das Ende 8 der Fördereinrichtung 7 schließt sich eine weitere Fördereinrichtung 11 an, die bei der dargestellten Ausführungsform ebenfalls als Vibrationsförderer ausgebildet ist und mit der die Schenkelfedern nach ihrer, weiter unten noch näher erläuterten Übergabe und Ausrichtung an der offenen Öse 6 hängend, d.h. mit ihrer Längserstreckung in vertikaler Richtung nebeneinander aufgereiht in Richtung der durch den Pfeil B gekennzeichneten Hauptförderrichtung, d.h. bei der für die Figuren 1 und 2 gewählten Darstellung von links nach rechts an eine in diesen Figuren nicht dargestellte, am rechten Ende der Fördereinrichtung 11 vorgesehene Arbeitsstation gefördert werden.

Die Fördereinrichtung 11 besteht bei der dargestellten Ausführungsform wieder aus einem schienenartigen Element 12, welches durch eine nicht näher dargestellte Antriebseinrichtung mit der zur Erzielung der Förderwirkung erforderlichen Bewegung bzw. Vibrationsbewegung beaufschlagt wird. Die obere Kante des schienenartigen Elementes 12 ist als Führungsleiste 13 derart ausgebildet, daß sich die Schenkelfedern 1 mit ihrer offenen Öse 6 an dieser Führungsleiste 13 einhängen können bzw. an der Fördereinrichtung 11 hängend, d.h. mit ihrer Längserstreckung in vertikaler Richtung liegend gehalten sind.

Wie insbesondere die Fig. 2 zeigt, steht die bei der dargestellten Ausführungsform die sich in horizontaler Richtung erstreckende Führungsleiste über das der Fördereinrichtung 7 zugewendete Ende des Elementes 12 vor und bildet mit diesem vorstehenden stangen- oder stabförmigen Bereich 13', der ebenfalls in einer horizontalen Ebene liegt, eine Art Auffädeldorn, an welchem sich die an das Ende 8 der Fördereinrichtung 7 geförderten Schenkelfedern 1 mit ihrer offenen Öse 6 einhängen können.

Wie insbesondere die Fig. 2 weiterhin zeigt, weist der Bereich 13' einen solchen Verlauf auf, daß er in seinem dem Ende 8 der Fördereinrichtung 7 unmittelbar gegenüberliegenden Abschnitt in Förderrichtung A einen horizontalen Abstand x aufweist, der durch Bewegen wenigsten einer der beiden Fördereinrichtungen 7 bzw. 11 relativ zu der anderen Fördereinrichtung in seiner Größe einstellbar ist.

Bei der dargestellten Ausführungsform weist die Führungsleiste 13 im Bereich 13' einen kreisförmigen Querschnitt auf, der kleiner ist als die Öffnung der Ösen, d.h. der Ösen 6, mit denen sich die Schenkelfedern 1 an der Führungsleiste 13 bzw. an dessen Bereich 13' einhängen sollen.

Wie die Fig. 1 zeigt, ist die Fördereinrichtung 11 bezogen auf die Fördereinrichtung 7 weiterhin so angeordnet, daß die obere Kante der Führungsleiste 13 bzw. des Bereiches 13' dieser Führungsleiste in etwa niveaugleich mit, vorzugsweise jedoch etwas tiefer als die Bodenfläche der Führungsnut 10 liegt, auf der die an das Ende 8 der Fördereinrichtung 7 geförderten Schenkelfedern 1 mit ihrem Federkörper 2 aufliegen.

Die Arbeitsweise der dargestellten Vorrichtung läßt sich, wie folgt, beschreiben:

In der Fördereinrichtung 7 bzw. bei der Übergabe an diese Fördereinrichtung sind die Schenkelfedern 1 bereits soweit ausgerichtet, daß jede an das Ende 8 der Fördereinrichtung 7 geförderte Schenkelfeder 1 mit ihrer Längserstreckung in Förderrichtung (Pfeil A) liegt, ansonsten weisen jedoch die an das Ende 8 geförderten Schenkelfedern 1 eine willkürliche Orientierung auf, d.h. bei einem Teil der an das Ende 8 geförderten Schenkelfedern 1 liegt der längere Schenkel 4 in Förderrichtung vorne und bei einem anderen Teil der Schenkelfedern 1 der kürzere Schenkel 3 in Förderrichtung vorne. Unabhängig hiervon weisen die an das Ende 8 geförderten Schenkelfedern 1 auch eine willkürliche Drehstellung in bezug auf ihre Längsachse auf, d.h. das offene Ende der in Förderrichtung vorne liegenden Öse weist bei einem Teil der Schenkelfedern 1 in vertikaler Richtung nach oben, bei einem Teil nach unten, wie dies in der Fig. 1 als ideale Übergabelage dargestellt ist, bei einem Teil in horizontaler Richtung zur einen oder anderen Seite usw., wobei auch jede beliebige Zwischenlage auftritt.

Mit der dargestellten Vorrichtung ist nun beabsichtigt, die Schenkelfedern 1 so an die Fördereirichtung 11 zu übergeben, daß sie dort mit den Ösen 6 an der Führungsleiste 13 gehalten von dieser in vertikaler Richtung herunterhängen, so daß damit sämtliche Schenkelfedern 1 an der Fördereinrichtung 11 zwangsläufig die gleiche Orientierung aufweisen, d.h. in gleichem Sinne ausgerichtet sind und in diesem Zustand an die auf die Fördereinrichtung 11 folgende Arbeitsstation übergeben werden können.

Hierfür ist der Abstand x so eingestellt, daß er größer ist als der Abstand, den der kürzere Schenkel 3 der gleichartig ausgebildeten Schenkelfedern 1 jeweils vom Masseschwerpunkt dieser Federn aufweist, jedoch kleiner ist als der Abstand des größeren Schenkels 4 von diesem Masseschwerpunkt. Der Masseschwerpunkt der Schenkelfedern 1 befindet sich in etwa in der Mitte des Federkörpers 2.

Auf diese Weise können grundsätzlich nur solche, über die Fördereinrichtung 7 herangeführte Schenkelfedern 1, deren längerer Schenkel 4 in Förderrichtung vorne liegt, am offenen Ende 8 der Fördereinrichtung 7 bzw. der Führungsnut 10 schließlich so weit über dieses Ende vorstehen, daß sich die Öse 6 über dem Bereich 13' der Führungsleiste 13 vorbei bzw. hinwegbewegt hat, bevor die über das Ende 8 vorstehende Schenkelfeder 1 bei einer weiteren Bewegung in Förderrichtung A, d.h. bei Überschreiten des Endes 8 durch den Masseschwerpunkt mit dem vorderen Ende aus der Führungsnut 10 nach unten abkippen könnte. D.h. solche Schenkelfedern 1, die sich mit dem längeren Schenkel 4 voraus über das Ende 8 der Fördereinrichtung 7 hinausbewegen und bei denen die Öffnung der Öse 6 nach unten weist, bleiben mit der Öse 6 an dem Bereich 13' der Führungsleiste 13 der Fördereinrichtung 11 hängen und werden in diesem Zustand zunächst in Richtung des Pfeiles B' und anschließend in Förderrichtung B der Arbeitsstation zugeführt. Da der Bereich 13' einen Querschnitt aufweist, der kleiner ist als der Durchmesser der Öffnung der Öse 6, bleiben an dem Bereich 13' auch solche Schenkelfedern 1 hängen, bei denen der Schenkel 4 in Förderrichtung vorne liegt, die offene Seite der Öse 6 jedoch nicht genau senkrecht nach unten weist, sondern die Ebene der Öse 6 gegenüber der Vertikalen geneigt ist, die jedoch noch die Übergabelage besitzen.

Solche, mit ihrem Schenkel 4 vorauseilende Schenkelfedern 1, bei denen die Ebene der Öse 6 über die Übergabelage hinaus gegenüber der Vertikalen geneigt ist bzw. bei denen die offene Seite dieser Öse insbesondere nach oben oder schräg nach oben weist, können in der beschriebenen Weise von der Fördereinrichtung 7 an die Fördereinrichtung 11 übergeben werden, sondern fallen ebenso wie alle Schenkelfedern 1, die mit dem kürzeren Schenkel 3 an das Ende 8 der Fördereinrichtung 7 gelangen, auf eine unter dem Bereich 13' bzw. unter dem Ende 8 vorgesehene Auffangvorrichtung 14 und werden beispielsweise über eine nicht näher dargestellte Fördereinrichtung an den Vorrat für die Schenkelfedern 1 zurückgeführt.

Da die Fördereinrichtung 11 als Vibrationsförderer ausgebildet ist, d.h. das Element 12 dieser Einrichtung eine Vibrationsbewegung bzw. hin- und hergehende Bewegung entsprechend der Förderrichtung B (Hauptförderrichtung) ausführt, die parallel zur Förderrichtung A der Fördereinrichtung 7 verläuft, ist es bei der dargestellten Ausführungsform wesentlich, daß der Bereich 13' in seinem dem Ende 8 gegenüberliegenden Abschnitt einen zur Förderrichtung A schrägen Verlauf in der Weise aufweist, daß die Förderrichtung A und die Förderrichtung B' des Abschnittes 13' einen spitzen Winkel a, d.h. einen Winkel kleiner als 90° miteinander einschließen, der sich zu der der Fördereinrichtung 7 abgewendeten Seite des Bereiches 13' hin öffnet, um so einen Federstau bei der Übergabe zu vermeiden bzw.

um sicherzustellen, daß die Schenkelfedern 1 nach der Übergabe an den Bereich 13' dort jeweils ohne Verzögerung in Richtung B' weggeführt werden.

Die beschriebene Vorrichtung kann selbstverständlich auch zum ausgerichteten Zuführen von symmetrischen Schenkelfedern 1 an eine Arbeitsstation dienen, d.h. zum Ausrichten von Schenkelfedern, deren Schenkel 3 und 4 die gleiche Länge aufweisen. In diesem Fall spielt dann die Orientierung der an das Ende 8 der Fördereinrichtung 7 geförderten Schenkelfedern in Achsrichtung keine Rolle mehr, d.h. alle Schenkelfedern 1 werden an dem Bereich 13' übergeben bzw. können sich dort mit einer ihrer offenen Ösen 5 bzw. 6 einhängen, die die Übergabelage aufweisen.

Es versteht sich, daß der Abstand x in Abhängigkeit von der Größe der Schenkelfedern 1 bzw. in Abhängigkeit von der Länge des Federkörpers 2 sowie der Schenkel 3 bzw. 4 so eingestellt wird, daß ein möglichst großer Teil der über die Fördereinrichtung 7 herangeführten Federn in der gewünschten Orientierung an die Fördereinrichtung 11 übergeben wird bzw. an der Führungsleiste 13 in der beschriebenen Weise hängenbleibt.

In den Figuren 3a und 3b ist nochmals verdeutlicht, daß eine Übergabe der Schenkelfedern 1 von der Fördereinrichtung 7 an die Fördereinrichtung 11 nicht nur bei senkrecht nach unten weisendem offenen Ösenende (Fig. 3a), sondern auch bei schrägliegender Öse (Fig. 3b) dann möglich ist, wenn beispielsweise die Öse 6 bei asymmetrischen Schenkelfedern 1 nur soweit geneigt ist, daß sie mit ihrem offenen Ende den einen kreisförmigen Querschnitt aufweisenden Bereich 13' (im ersten Moment der Übergabe) noch unterhalb der horizontalen Mittelebene M dieses Bereiches hintergreifen kann. Dies bedeutet, daß die maximale Schrägstellung der Öse 6, bei der noch eine Übergabe möglich ist, im wesentlichen auch von dem Querschnitt des Bereiches 13' abhängig ist.

Da nicht auszuschließen ist, daß von der Fördereinrichtung 7 an die Fördereinrichtung 11 auch Schenkelfedern 1 übergeben werden, die an ihren Enden miteinander verhakt sind, so daß dann an der unteren Öse 5 einzelner, an der Führungsleiste 13 hängender Schenkelfedern 1 eine weitere Schenkelfeder 1' eingehängt ist, sind im Bereich der Fördereinrichtung 11 noch Maßnahmen vorgesehen, um die an das Ösen 5 hängenden Schenkelfedern 1' zu entfernen.

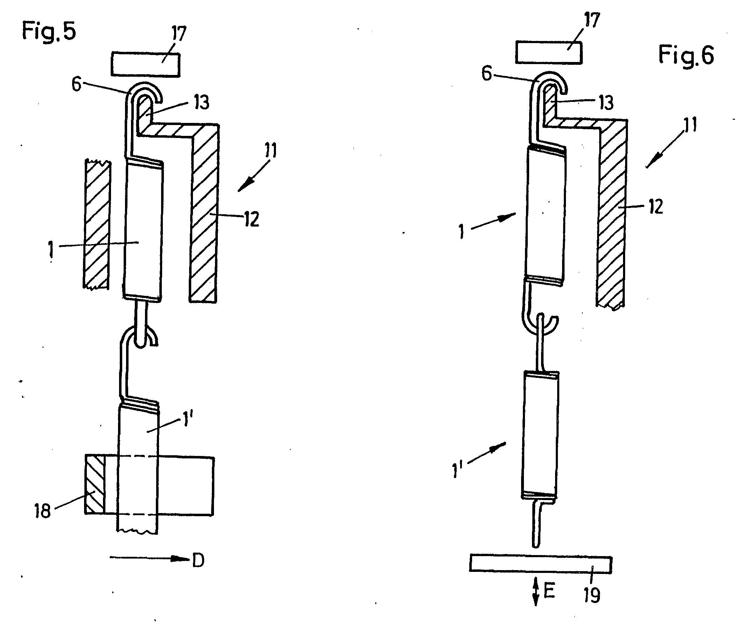

Bei entsprechender Orientierung der Ösen 5 bezüglich der Osen 6 können diese Maßnahmen entsprechend der Fig. 4 beispielsweise darin bestehen, daß die Schenkelfedern 1 bei ihrer Bewegung entlang der Fördereinrichtung 11 um die an der Führungsleiste 13 eingehängte Öse 6 entsprechend dem Pfeil C der Fig. 4 soweit zur Seite geschwenkt werden, daß die an der unteren Öse 5 ev. eingehängten Schenkelfedern 1' freikommen und abfällen. Das Schwenken der von der Führungsleiste 13 herunterhängenden Schenkelfedern 1 wird dadurch erreicht, daß diese Federn auf eine sich über eine Teillänge der Fördereinrichtung 11 erstreckende Führungsschiene 16 auflaufen, die entweder Teil des Elementes 12 oder aber ein zusätzliches Konstruktionselement ist sowie eine Führungsfläche 16 aufweist, die in Förderrichtung B einen zunehmenden seitlichen Abstand von einer die Führungsleiste 13 einschließenden vertikalen Ebene besitzt. Um beim Schwenken der Schenkelfedern 1 ein Aushaken dieser Federn an der Führungsleiste 13 zu verhindern, ist über dieser Führungsleiste und in einem geringen Abstand von der Oberkante dieser Leiste eine Sicherungsleiste 17 vorgesehen, die sich zumindest über den Bereich der Förderstrecke 11 erstreckt, in dem das Schwenken der Schenkelfedern 1 erfolgt. Entsprechend Fig. 5 ist es grundsätzlich auch möglich, zum Entfernen der eingehängten Schenkelfedern 1' für diese ein Führungselement 18 vorzusehen, welches entsprechend dem Führungselement 15 wirkt, allerdings die eingehängten Schenkelfedern 1' entsprechend dem Pfeil D soweit zur Seite schwenkt, daß die Schenkelfeder 1' von den an der Führungsleiste 13 eingehängten Schenkelfedern 1 freikommen.

Eine dritte Möglichkeit ist in der Fig. 6 dargestellt. Hier ist unter einem Teilbereich der Förderbahn des Förderelementes 11 ein beispielsweise plattenförmiger Auswerfer 19 vorgesehen, der unter Verwendung eines entsprechenden Antriebs eine auf- und abwärts gerichtete Bewegung (Doppelpfeil E), ggf. auch in Verbindung mit einer zusätzlichen seitlichen Bewegung ausführt und der mit seiner Oberseite gegen die unteren Enden der eingehängten Schenkelfedern 1' zur Anlage kommt und diese dadurch von dem an der Führungsleiste 13 geführten Schenkelfedern 1 löst, welche auch hier wiederum durch die Sicherungsleiste 17 gegen Lösen von der Führungsleiste 13 gesichert sind.

**Patentansprüche**

1. Verfahren zum ausgerichteten Zuführen von gewendelten Federn (1), die an wenigstens einem ihrer beiden Federenden mit einer offenen Öse (6) versehen sind, an eine Arbeitsstation,

wobei die Federn (1), die mit ihrem Federkörper (2) auf einer Auflagefläche einer ersten Fördereinrichtung (7) aufliegen und mit ihrer Längserstreckung in Förderrichtung (A) dieser ersten Fördereinrichtung (7) angeordnet sind, dem Ende dieser ersten Fördereinrichtung (7) zugeführt und über eine zweite Fördereinrichtung (11), die mit ihrem Anfang auf das Ende der ersten Fördereinrichtung (7) folgt, an die Arbeitsstation weitergeleitet werden,

wobei die Federn (1) auf der ersten Fördereinrichtung (7) über das dortige Ende, welches mit Abstand (x) von dem Anfang der zweiten Fördereinrichtung (11) vorgesehen ist, soweit hinausbewegt werden, bis die jeweilige Feder (1) mit ihrem vorauseilenden, durch die erste Fördereinrichtung (7) nicht mehr abgestützten Federende nach unten kippt, wobei bei diesem nach untenkippen solche Federn, die an ihrem vorauseilenden Federende eine mit ihrer Öffnung nach unten gerichtete Öse (6) aufweisen, sich mit dieser Öse an einem Bereich (13') einer Führungsleiste (13) der zweiten Fördereinrichtung (11) einhängen und mit ihrer Öse (6) an dieser Führungsleiste (13) nach unten hängend der Arbeitsstation zugeführt werden, wobei der genannte Bereich (13') quer zur Förderrichtung verläuft und eine freiliegende Oberkante aufweist, die in etwa in einer Ebene mit der Auflagefläche der ersten Fördereinrichtung liegt.

2. Verfahren nach Anspruch 1, gekennzeichnet durch die Verwendung einer Führungsleiste (13), die zumindest an ihrem den Anfang der zweiten Fördereinrichtung (11) bildenden Bereich (13) in einer horizontalen Ebene verläuft.

3. Verfahren nach Anspruch 1 oder 2, gekennzeichnet durch die Verwendung einer Führungsleiste (13), die an ihrem den Anfang der zweiten Fördereinrichtung (11) bildenden Bereich (13') geringfügig unterhalb oder geringfügig oberhalb der Ebene der Auflagefläche der ersten Fördereinrichtung (7) liegt.

4. Verfahren nach einem der Ansprüche 1-3, gekennzeichnet durch die Verwendung eines Linearförderers, vorzugsweise in Form eines Vibrationsförderers für die erste Fördereinrichtung (7) und/oder die zweite Fördereinrichtung (11).

5. Verfahren nach einem der Ansprüche 1-4, dadurch gekennzeichnet, daß an der zweiten Fördereinrichtung (11) solche Federn (1'), die mit den an der Führungsleiste (13) eingehängten Federn (1) verhakt sind, mechanisch bzw. durch Abblasen mittels Druckluft entfernt werden.

6. Verfahren nach einem der Ansprüche 1-5, dadurch gekennzeichnet, daß der Abstand (x) zwischen dem Ende der ersten Fördereinrichtung (7) und dem Anfang der zweiten Fördereinrichtung (11) eingestellt wird.

7. Vorrichtung zum Durchführen des Verfahrens nach einem der Ansprüche 1 bis 6, gekennzeichnet durch eine erste Fördereinrichtung (7) mit einer Auflagefläche für den Federkörper der gewendelten, an wenigstens einem Ende mit einer offenen Öse (6) versehenen Federn (1), die mit ihrer Längserstreckung in Förderrichtung (A) dieser ersten Fördereinrichtung (7) angeordnet sind, und durch eine zweite Fördereinrichtung (11), die in der Förderrichtung (A) mit ihrem Anfang auf das Ende der ersten Fördereinrichtung (7) folgt und die Federn (1) an die Arbeitsstation weiterleitet, wobei der Anfang der zweiten Fördereinrichtung (11) von einem Bereich (13') einer Führungsleiste (13) gebildet ist, der (Bereich) quer zur Förderrichtung (A) verläuft und eine freiliegende Oberkante aufweist, die in etwa in einer Ebene mit der Auflagefläche der ersten Fördereinrichtung (7) liegt und in solchem Abstand (x) von dem Ende der ersten Fördereinrichtung (7) vorgesehen ist, daß die Federn (1) auf der ersten Fördereinrichtung (7) über das dortige Ende jeweils soweit hinausbewegt werden, bis die jeweilige Feder (1) mit ihrem vorauseilenden, durch die erste Fördereinrichtung (7) nicht mehr abgestützten Federende nach unten kippt und dabei solche Federn, die an ihrem vorauseilenden Federende eine mit ihrer Öffnung nach unten gerichtete Öse (6) aufweisen, sich mit dieser Öse an dem Bereich (13') der Führungsleiste (13) der zweiten Fördereinrichtung (11) einhängen und mit ihrer Öse (6) an dieser Führungsleiste (13) nach unten hängend der Arbeitsstation zugeführt werden.

## Revendications

1. Procédé permettant d'amener, à une poste de travail et dans une orientation donnée, des ressorts à boudin (1) qui comportent, à au moins l'une de leurs deux extrémités, une boucle ouverte (6), ce procédé consistant, les ressorts (1) reposant par leux partie principale (2) sur une surface de support d'un premier transporteur (7) et s'étendant avec leur longueur disposée suivant la direction de transport (A) de ce premier transporteur (7), à les amener à l'extrémité de sortie de ce dernier et à continuer de les conduire jusqu'au poste de travail à l'aide d'un second transporteur (11) dont l'extrémité d'entrée est disposée à la suite de l'extrémité de sortie du premier transporteur (7), ces ressorts (1) étant déplacés sur ce premier transporteur (7) de façon à dépasser l'extrémité de sortie de celui-ci, qui est prévue à une distance (x) de l'extrémité d'entrée du second transporteur (11), dans une mesure telle que chaque ressort (1) à son tour bascule vers le bas par son extrémité située vers l'avant qui n'est plus soutenue par le premier transporteur (7), de sorte que, lors de ce basculement vers le bas, les ressorts qui comportent, à leur extrémité située vers l'avant, une boucle (6) dont l'ouverture est dirigée vers le bas se suspendent par cette boucle sur une partie (13') d'une barre de guidage (13) du second transporteur (11) et sont conduits au poste de travail en étant suspendus vers le bas, par leur boucle (6), sur celle barre de guidage (13), ladite partie (13') de cette dernière s'étendant transversalement à la direction de transport et comportant un bord supérieur qui est libre et est situé sensiblement dans le même plan que la surface de support du premier transporteur.

2. Procédé suivant la revendication 1, caractérisé en ce qu'on utilise une barre de guidage (13) qui, au moins à l'endroit de sa partie (13') formant l'extrémité d'entrée du second transporteur (11), s'étend dans un plan horizontal.

3. Procédé suivant la revendication 1 ou 2, caractérisé en ce qu'on utilise une barre de guidage (13) qui, à l'endroit de sa partie (13') formant l'extrémité d'entrée du second transporteur (11), est située légèrement au-dessous ou légèrement au-dessus du plan de la surface de support du premier transporteur (7).

4. Procédé suivant l'une des revendications 1 à 3, caractérisé en ce que, pour la premier transporteur (7) et/ou le second transporteur (11), on utilise un transporteur rectiligne, se présentant de préférence sous la forme d'un transporteur à secousses.

5. Procédé suivant l'une des revendications 1 à 4, caractérisé en ce que, à l'endroit du second transporteur (11), les ressorts (1') qui sont accrochés aux ressorts (1) suspendus à la barre de guidage (13) sont retirés mécaniquement ou par soufflage à l'air comprimé.

6. Procédé suivant l'une des revendications 1 à 5, caractérisé en ce qu'on peut régler la distance (x) séparant l'extrémité de sortie du premier transporteur (7) et l'extrémité d'entrée du second transporteur (11).

7. Dispositif permettant de mettre en oeuvre un procédé suivant l'une des revendications 1 à 6, caractérisé en ce qu'il comprend un premier transporteur (7), comportant une surface de support des parties principales des ressorts à boudin (1), qui comportant, à au moins l'une de leurs extrémités, une boucle ouverte (6) et sont disposés avec leur longueur s'étendant suivant la direction de transport (A) de ce premier transporteur (7), et un second transporteur (11) qui, par son extrémité d'entrée et suivant la direction de transport (A), est disposé à la suite de l'extrémité de sortie du premier transporteur (7) et qui assure la poursuite du mouvement d'amenée des ressorts (1) au poste de travail, cette extrémité d'entrée du second transporteur (11) étant constituée par une partie (13') d'une barre de guidage (13), laquelle partie s'étend transversalement à la direction de transport (A) et comporte un bord supérieur libre qui est situé sensiblement dans le même plan que la surface de support du premier transporteur (7) et est prévu à une distance (x) de l'extrémité de sortie du premier transporteur (7) telle que les ressorts (1) sont déplacés sur ce premier transporteur (7) de façon à dépasser l'extrémité de sortie de celui-ci, qui est prévue à une distance (x) de l'extrémité d'entrée du second transporteur (11), dans une mesure telle que chaque ressort (1) à son tour bascule vers le bas par son extrémité située vers l'avant qui n'est plus soutenue par le premier transporteur (7), de sorte que, lors de ce basculement vers le bas, les ressorts qui comportent, à leur extrémité située vers l'avant, une boucle (6) dont l'ouverture est dirigée vers le bas se suspendent par cette boucle sur une partie (13') d'une barre de guidage (13) du second transporteur (11) et sont conduits au poste de travail en étant suspendus vers le bas, par leur boucle (6), sur cette barre de guidage (13), ladite partie (13') de cette dernière s'étendant transversalement à la direction de transport et comportant un bord supérieur qui est libre et est situé sensiblement dans le même plan que la surface de support du premier transporteur.

## Claims

1. Method of aligned feeding of coiled springs (1), which are provided at at least one of their two spring ends with an open eyelet (6), to a working station, in which method the springs (1), which rest with their spring body (2) on a supporting surface of a first conveying device (7) and are arranged with their longitudinal extent in conveying direction (A) of this first conveying device (7), are fed to the end of this first conveying device (7) and passed on to the working station via a second conveying device (11), which with its beginning follows on from the end of the first conveying device (7), in which method the springs (1) on the first conveying device (7) are moved out beyond the end there, which is provided with clearance (x) from the beginning of the second conveying device (11), until the respective spring (1) tips down with its leading spring end, no longer supported by the first conveying device (7), in which tipping-down such springs which have at their leading spring end an eyelet (6), directed downwards with its opening, hook on with this eyelet at a region (13') of a guide strip (13) of the second conveying device (11) and are fed to the working station, hanging down with their eyelet (6) on this guide strip (13), the said region (13') running transversely to the conveying direction and having a free upper edge, which lies approximately in a plane with the supporting surfaces of the first conveying device.

2. Method according to Claim 1, characterized by the use of a guide strip (13) which, at least at its region (13) forming the beginning of the second conveying device (11), runs in a horizontal plane.

3. Method according to Claim 1 or 2, characterized by the use of a guide strip (13) which, at its region (13') forming the beginning of the second conveying device (11), lies slightly below or slightly above the plane of the supporting surface of the first conveying device (7).

4. Method according to one of Claims 1—3, characterized by the use of a linear conveyor, preferably in the form of a vibration conveyor, for the first conveying device (7) and/or the second conveying device (11).

5. Method according to one of Claims 1—4, characterized in that, on the second conveying device (11), such springs (1') which are hooked up with the springs (1) hung onto the guide strip (13) are removed mechanically or by blowing off by means of compressed air.

6. Method according to one of Claims 1—5, characterized in that the clearance (x) between the end of the first conveying device (7) and the beginning of the second conveying device (11) is set.

7. Apparatus for carrying out the method according to one of Claims 1 to 6, characterized by a first conveying device (7) with a supporting surface for the spring body of the coiled springs (1), provided at at least one end with an open eyelet (6), which springs are arranged with their longitudinal extent in conveying direction (A) of this first conveying device (7), and by a second conveying device (11), which with its beginning follows on in the conveying direction (A) from the end of the first conveying device (7) and passes on the springs (1) to the working station, in which apparatus the beginning of the second conveying device (11) is formed by the region (13') of a guide strip (13), which (region) runs transversely to the conveying direction (A) and has a free upper edge, which lies approximately in a plane with the supporting surface of the first conveying device (7) and is provided at such a clearance (x) from the end of the first conveying device (7) that the springs (1) on the first conveying device (7) are in each case moved out beyond the end there to such an extent that the respective spring (1) tips down with its leading spring end, no longer supported by the first conveying device (7), and in so doing such springs which have at their leading spring end an eyelet (6), directed downwards with its opening, hook on with this eyelet at the region (13') of the guide strip (13) of the second conveying device (11) and are fed to the working station, hanging down with their eyelet (6) on this guide strip (13).

Fig.1

EP 0 212 164 B1

Fig.2

Fig.3

Fig.4

Fig.5

Fig.6

EP 0 212 164 B1